Europäisches Patentamt

European Patent Office

Office européen des brevets

(19)

(11) Veröffentlichungsnummer: **0 238 579**
**B1**

(12) **EUROPÄISCHE PATENTSCHRIFT**

(45) Veröffentlichungstag der Patentschrift:
03.01.90

(21) Anmeldenummer: 86905812.3

(22) Anmeldetag: 24.09.86

(86) Internationale Anmeldenummer:
PCT/EP 86/00600

(87) Internationale Veröffentlichungsnummer:
WO/8701965 (09.04.87 Gazette 87/08)

(51) Int. Cl.$^5$: **B 01 J 39/02**, C 02 F 5/02

(54) VERFAHREN UND MITTEL ZUR WASSERBEHANDLUNG.

(30) Priorität: 27.09.85 DE 3534472

(43) Veröffentlichungstag der Anmeldung:
30.09.87 Patentblatt 87/40

(45) Bekanntmachung des Hinweises auf die Patenterteilung: 03.01.90 Patentblatt 90/01

(84) Benannte Vertragsstaaten:
DE

(56) Entgegenhaltungen:
DE–C– 237 603
FR–A– 1 008 756
GB–A– 606 823
US–A– 2 206 691
US–A– 4 094 778

(73) Patentinhaber: Henkel Kommanditgesellschaft auf Aktien
Postfach 1100 Henkelstrasse 67
D-4000 Düsseldorf-Holthausen (DE)

(72) Erfinder: FANENBRUCK, Walter
Am Falder 85
D-4000 Düsseldorf 13 (DE)
Erfinder: PITTERMANN, Wolfgang
Schwarzbachstrasse 33
D-4000 Düsseldorf 12 (DE)
Erfinder: WICHELHAUS, Winfried
Stifterstrasse 3
D-4020 Mettmann (DE)

**Beschreibung**

Hartes Wasser ist für eine Reihe von technischen Verwendungszwecken ungeeignet oder schädlich. Besonders bekannt ist die unerwünschte Wirkung von hartem Wasser bei der Textilwäsche mit Seifenwaschmitteln oder bei der Verwendung als Kesselspeisewasser. Auch bei so unterschiedlichen Anwendungsgebieten wie der Herstellung von Bier und alkoholfreien Getränken, bei der Betonherstellung und zum Füllen von Akkumulatoren ist hartes Wasser ungeeignet. Neben der eigentlichen Wasserhärte stört bei vielen Anwendungszwecken auch die Anwesenheit von Schwermetallverbindungen, insbesondere von Eisen- und Mangan-Verbindungen, wie beispielsweise bei der Verwendung in der Textil-, Papier- und Zellstoff-Industrie. Für Trinkzwecke ist zwar ein hartes Wasser einem weichen Wasser vorzuziehen; jedoch wird beim Zubereiten von Kaffee und Tee mit Wasser von mittlerer und hoher Härte der Wohlgeschmack der Getränke beeinträchtigt.

Zur Enthärtung des Wassers, genauer gesagt zu seiner Teilenthärtung, wurde früher das sogenannte Kalk-Soda-Verfahren verwendet. Bei diesem Fällungsverfahren werden die Calciumhärte und die Magnesiumhärte des Wassers durch eine Mischung aus Calciumhydroxid und Soda entfernt, wobei durch das Zusammenwirken von Calciumhydroxid und Soda die sogenannte Carbonathärte (Calcium- und Magnesiumbicarbonat) sowie die Nicht-Carbonathärte, also Calcium- und Magnesiumsulfat, als Calciumcarbonat und Magnesiumhydroxid bis auf eine Resthärte von etwa 2 °dH (deutsche Härte) entfernt werden. Die Kalk-Soda-Enthärtung, die seit Anfang des Jahrhunderts gebräuchlich war, hat jedoch den Nachteil, daß lange Enthärtungszeiten und Aufheizen des Wassers erforderlich sind. Deshalb ist das Kalk-Soda-Verfahren heute weitgehend durch das Ionenaustauschverfahren mit regenerierbaren organischen Kationenaustauschern verdrängt worden (Kirk-Othmer, Vol. 22, 2. Auflage, 1970, Seite 99 ff.; Römpps Chemie-Lexikon, 7. Auflage, 1973, Seite 1 391).

Ein Verfahren zur Teilenthärtung und geschmacklichen Verbesserung von Trinkwasser unter Verwendung von granulierten Zeolithen, die in Papiervliesbeuteln verpackt und angewendet werden, ist aus der deutschen Offenlegungsschrift 25 04 688 bekannt. Das so behandelte Trinkwasser soll sich besonders zur Tee- und Kaffee-Herstellung eignen. Die Herstellung von Zeolith-Granulaten und ihre Verwendung für die Enthärtung von Wasser sind aus den deutschen Offenlegungsschriften 28 06 799, 28 29 143, 28 29 165 und 28 29 230 bekannt. Schließlich ist aus der deutschen Offenlegungsschrift 29 26 606 ein Verfahren zur Behandlung von Abwässern bekannt, wobei man neben üblichen Fällungs- und Flockungsmitteln zusätzlich röntgenamorphe oder kristalline Alkalialumosilikate, insbesondere Zeolith A, in Mengen von 0,1 bis 10 g/l Abwasser einsetzt.

Gegenstand der Erfindung ist ein Verfahren zur Behandlung von Trinkwasser und Brauchwasser bzw. Abwasser, wobei man eine Mischung aus 0,1 bis 1 Gewichtsteilen feinteiligem Calciumhydroxid mit 1 Gewichtsteil feinteiligem ionenaustauschendem Natriumzeolith des Typs NaA (« feinteilig ») : Teilchengröße 1 bis 100 μm) in dem Wasser suspendiert und 1 bis 10 Minuten lang bis zum Abklingen der Behandlungsvorgänge suspendiert hält, und dann das behandelte Wasser nach dem Absetzenlassen der suspendierten Teilchen und Dekantieren bzw. nach dem Filtrieren gewinnt. Unter feinteilig werden bevorzugt Teilchengrößen unterhalb 50 μm, des in Wasser suspendierten Feststoffs verstanden. Bekanntlich tauschen die ionenaustauschenden Zeolithe wenigstens 50 mg CaO/g des als wasserfrei angenommenen Zeoliths innerhalb 10 min. aus. Die Erfindung betrifft ferner ein Mittel zur Durchführung des obenerwähnten Verfahrens gemäß dem Anspruch 4.

Die gemeinsame Verwendung von Calciumhydroxid und Zeolith eignet sich überraschenderweise zum Teilenthärten von hartem Wasser; man erzielt hiert bereits nach wenigen Minuten Behandlungsdauer und ohne das Wasser erwärmen zu müssen, eine Teilenthärtung auf Werte von 3 bis 4 °dH. Vorhandene Verunreinigungen des Wassers durch Schwermetalle wie Eisen- und Manganverbindungen werden durch das erfindungsgemäße Verfahren ebenfalls beseitigt; es ist anzunehmen, daß in diesem Falle sowohl Ionenaustausch- als auch Adsorptionsvorgänge eine Rolle spielen. Schließlich läßt sich das erfindungsgemäße Verfahren auch auf die Reinigung von bestimmten Abwässern anwenden, wobei hier in erster Linie die Fällung bzw. Ausflockung unerwünschter organischer Abfallprodukte bzw. die Entsäuerung des Abwassers angestrebt wird.

Die erfindungsgemäße Behandlung des Wassers betrifft deshalb die Vorgänge der Teilenthärtung, der Schwermetallentfernung bzw. der Entfernung organischer Verunreinigungen durch Fällung und Ausflockung sowie die Entsäuerung durch pH-Werterhöhung. Je nach der Natur der dabei stattfindenden Reaktionen ist die Behandlungsdauer zu bemessen. Allgemein gilt jedoch, daß nach wenigen Minuten, d.h. nach ca. 1 bis 10 Minuten das erwünschte Verfahrensergebnis erzielt wird und die Reaktionen abklingen. Meistens reicht die Zeit, die zur Abwicklung des Verfahrens ohnehin aufzuwenden ist, um die Suspension zu erhalten aus, daß die gewünschten Effekte erzielt werden. Durch Erwärmen des zu behandelnden Wassers lassen sich allgemein diese Effekte geringfügig verbessern, jedoch ist es gerade ein Vorteil des Verfahrens, ohne Erwärmung des Wassers auszukommen.

Unter Trinkwasser wird das durch die Wasserversorgungsunternehmen aufbereitete und über das installierte Verteilersystem allgemein zugängliche Leitungswasser verstanden. Viele gewerbliche Unternehmen der Getränkeindustrie sind auch auf dieses Versorgungssystem für die Herstellung von Bier oder alkoholfreien Getränken angewiesen. In Gegenden mit hartem Trinkwasser ist eine Teilenthärtung des Wassers notwendig, um die gewünschte Getränkequalität einzustellen. Unter Brauchwasser wird gewerblich genutztes Wasser, das nicht aus Trinkwasseraufbereitungsanlagen stammt und meist con der Industrie selbst in eigenen Anlagen gewonnen wird, verstanden. Brauchwasser hat im allgemeinen keine Trinkwasserqualität, was vom Anwendungszweck und den Kosten her auch nicht angestrebt wird. Für Brauchwasser ist neben der Entfernung der Wasserhärte auch die Entfernung von Eisen- und Manganverbindungen von Wichtigkeit. Unter Abwasser wird hier ein mit unerwünschten organischen oder anorganischen Stoffen befrachtetes Wasser als Folge von technischen Prozessen verstanden. Durch das erfindungsgemäße Verfahren wird dieses Abwasser vor der weiteren Wiederaufbereitung einer Art Vorreinigungs-Prozedur mittels Fällung bzw. Ausflockung bzw. Entsäuerung unterzogen.

Besonders bemerkenswert bei dem erfindungsgemäßen Verfahren ist die Eigenschaft der suspendierten Reaktionsmasse aus Calciumhydroxid und Zeolith, am Ende der Behandlung gut zu sedimentieren, so daß sich das überstehende Wasser leicht dekantieren bzw. abfiltrieren läßt. Diese Eigenschaft ist insofern überraschend, als sie bei der Behandlung des Wassers mit Zeolith allein oder mit Calciumhydroxid allein nicht auftritt.

Nach einer bevorzugten Ausführungsform des Verfahrens werden pulvrige oder pastöse Formen des Calciumhydroxids und des Zeoliths zunächst separat mit Wasser aufgeschlämmt und erst kurz vor der gemeinsamen Anwendung in dem gewünschten Mengenverhältnis miteinander vermischt. Die Standzeit einer derartigen frisch zubereiteten Mischsuspension kann mindestens 1 Arbeitstag ohne Wirkungseinbuße betragen, so daß mehrere Behandlungsvorgänge mit einem einzigen Ansatz durchgeführt werden können. Zu empfehlen ist aber auch das gleichzeitige Zudosieren der separaten Wirkstoffsuspensionen zu dem zu behandelnden Wasser.

Die zur Wasserbehandlung benutzten Mengen liegen vorzugsweise bei 0,2 bis 0,8 Gewichtsteile feinteiligem Calciumhydroxid pro 1 Gewichtsteil Natriumzeolith (bezogen auf die gebundenes Wasser enthaltende, d. h. hydratisierte Form des Zeoliths im Gleichgewichtszustand). Die für die Wasserbehandlung erforderliche Menge an Calciumhydroxid/Natriumzeolith hängt naturgemäß von der Qualität des zu behandelnden Wassers und vom anzustrebenden Behandlungsziel ab. Die Anwendungsmenge kann deshalb in gewissen Grenzen schwanken und liegt bei 0,2 bis 20 Gewichtsteilen der Calciumhydroxid/Natriumzeolith-Mischung pro 1 000 Gewichtsteile des zu behandelnden Wassers. Im allgemeinen reichen 0,4 bis 5 Gewichtsteile der Mischung für die Behandlung von 1 000 Gewichtsteilen Trinkwasser bzw. Brauchwasser bzw. Abwasser aus, d. h. der Materialaufwand für das Verfahren ist als gering anzusehen.

Zur Herstellung der Aufschlämmungen (Suspensionen) des Calciumhydroxids bzw. Natriumzeoliths benutzt man im einfachsten Fall die pulverförmigen Stoffe ; eine leichtere Handhabung, insbesondere eine bessere Schüttfähigkeit und das Vermeiden von Stäuben wird beim Benutzen von abriebfesten Agglomeraten, die im Kontakt mit dem Wasser leicht zerfallen, erreicht. Wäßrige Pasten von Calciumhydroxid bzw. Natriumzeolith sind ebenfalls als Ausgangsformen zur Bereitung der Suspensionen geeignet.

Wegen der geringen Mengen an Calciumhydroxid und Natriumzeolith, die zur Durchführung des erfindungsgemäßen Verfahrens erforderlich sind, entsteht auch nur eine geringe Menge Abfall. Dieses Abfallmaterial kann ohne Probleme in Feststoff-Deponien gelagert werden. Dies gilt insbesondere für die bei der Behandlung von Trink- und Brauchwasser entstehenden Abfallmaterialien.

Durch die Behandlung wird das Wasser meist schwach alkalisch, d. h. der pH-Wert liegt bei 8 bis 10. Das behandelte Wasser kann in dieser Form direkt für die meisten Zwecke verwendet werden. Gegebenenfalls ist eine pH-Wertsenkung durch Zusatz von Kohlendioxid zu erreichen. Die Alkalität des bei dem erfindungsgemäßen Verfahren resultierenden Wassers ist jedenfalls eher geringer als die bei den üblichen Enthärtungsverfahren mit organischen Kationenaustauscher-Harzen. Ein weiterer Nachteil dieser Austauscher-Harze liegt bekanntlich darin, daß diese zu ihrer Regenerierung große Mengen Salzwasser benötigen und dadurch ein eigenes Abwasserproblem schaffen.

Beispiele

Beispiel 1

Dieses Beispiel zeigt die Teilenthärtung von hartem Trinkwasser. In einem 2-Liter-Becherglas wurden 500 ml Leitungswasser mit 18 °dH vorgelegt und mit einer Aufschlämmung von 1 Gramm Zeolith A und 0,2 Gramm Calciumhydroxid in 20 ml Wasserversetzt. Die resultierende Suspension wurde 2 Minuten lang gerührt. Dann wurde eine weitere 500 ml-Portion des harten Wasers hinzugegeben und noch einmal 2 Minuten gerührt. Danach wurde 10 Minuten stehengelassen und anschließend das klare Wasser dekantiert. Das so behandelte Wasser hatte eine Resthärte von 3,5 °dH und einen pH-Wert von 9,3.

Beispiel 2

Schwarzer Tee wurde unter Verwendung des Trinkwassers aus Beispiel 1 zubereitet. Dieser Tee wurde von 3 Testpersonen als geschmacklich besser als ein Tee aus unbehandeltem Trinkwasser beurteilt. Die Bildung von Teestein wurde bei dem Tee aus behandeltem Wasser nicht beobachtet. Der pH-Wert des Tees aus behandeltem Wasser betrug 5,5, der pH-Wert des Tees aus unbehandeltem Wasser lag bei 5,0 ; d. h. die höhere Alkalität des behandelten Wassers war im fertigen Tee praktisch nicht mehr nachweisbar.

Beispiel 3

Dieses Beispiel beschreibt die Behandlung von technischem Brauchwasser, das direkt als Brunnenwasser gewonnen wurde und durch kolloidales Eisenhydroxid schwach rotbraun gefärbt war. Härtegrad : 18 °dH.
1 Liter dieses Brauchwassers wurde mit 1 Gramm Zeolith NaA und 0,3 Gramm Ca(OH)$_2$, suspendiert in 20 ml Wasser, behandelt. Es resultiert ein klares farbloses Wasser mit 4 °dH und einem pH-Wert von 9,5.

Beispiel 4

Dieses Beispiel beschreibt die Behandlung einer Abwasserprobe (Kläranlage Hochdahl), die schwer filtrierbare organische Bestandteile enthielt und trüb und braun aussah. Eine 2-Liter-Probe wurde mit 2 Gramm Zeolith NaA und 0,5 Gramm Calciumhydroxid, suspendiert in 20 ml Wasser, behandelt. Zusätzliche Zugabe von 0,1 Gramm Aktivkohle. Nach der Behandlung (Aufrühren und Stehenlassen, Gesamtdauer 10 min.) war das Wasser klar geworden unter Bildung eines Bodensatzes. Der ursprüngliche Fäulnisgeruch der Wasserprobe war nach dem Behandeln wesentlich schwächer.
Für die Beispiele wurde als Natriumzeolith handelsüblicher Zeolith NaA in hydratisierter Form (Zeolith HAB A 40 der Firma Degussa) verwendet. Als Calciumhydroxid wurde Handelsware der Firma Merck, Artikel- Nr. 2047, verwendet.

Beispiel 5

Dieses Beispiel beschreibt die Behandlung von schwermetallbelastetem Wasser.
In 1 l Leitungswasser von 16 °d Wasserhärte wurden 4 mmol Kupfersulfat und 4 mmol Zinksulfat gelöst. Dieses schwermetallhaltige Wasser wurde mit einer Paste versetzt, die aus 4 g Zeolith NaA (Wessalith P, Fa. Degussa), 0,8 g Calciumhydroxid und 80 ml Wasser hergestellt wurde. Durch Rühren wurde die Paste gleichmäßig dispergiert. Danach wurde sie 10 Minuten lang stehengelassen und anschließend das klare Wasser dekantiert.
Dieses so behandelte Wasser enthielt nurmehr 0,5 · 10⁻³ mmol Cu/l und 3,0 · 10⁻³ mmol Zn/l.

**Patentansprüche**

1. Verfahren zur Behandlung von Trinkwasser und Brauchwasser bzw. Abwasser, wobei man eine Mischung aus 0,1 bis 1 Gewichtsteilen feinteiligem Calciumhydroxid mit 1 Gewichtsteil feinteiligem ionenaustauschendem Natriumzeolith des Typs NaA (« feinteilig » : Teilchengröße 1 bis 100 μm) in dem Wasser suspendiert und 1 bis 10 Minuten lang bis zum Abklingen der Behandlungsvorgänge suspendiert hält, und dann das behandelte Wasser nach dem Absetzenlassen der suspendierten Teilchen und Dekantieren bzw. nach dem Filtrieren gewinnt.

2. Verfahren nach Anspruch 1, dadurch gekennzeichnet, daß man separat hergestellte wäßrige Suspensionen des Calciumhydroxids und Natriumzeoliths verwendet und diese als frisch zubereitete Mischsuspension zusetzt.

3. Verfahren nach einem der Ansprüche 1 oder 2, dadurch gekennzeichnet, daß man auf 1 000 Gewichtsteile des zu behandelnden Wassers 0,2 bis 20 Gewichtsteile, vorzugsweise 0,4 bis 5 Gewichtsteile der Mischung aus Calciumhydroxid und Natriumzeolith einsetzt.

4. Mittel zur Durchführung des Verfahrens zur Wasserbehandlung nach einem der Ansprüche 1 bis 3, bestehend aus 0,1 bis 1 Gewichtsteilen feinteiligem Calciumhydroxid und 1 Gewichtsteil feinteiligem Natriumzeolith des Typs Zeolith NaA in Form der frisch zubereiteten Mischsuspensionen.

**Claims**

1. A process for the treatment of drinking water and process water or wastewater in which a mixture of 0.1 to 1 part by weight finely divided calcium hydroxide with 1 part by weight finely divided ion-exchanging sodium zeolite of the NaA type (finely divided = particle size of 1 to 100 μm) is suspended in the water and kept in suspension for 1 to 10 minutes until the treatments are complete and the treated water is then recovered after sedimentation of the suspended particles and decantation or after filtration.

2. A process as claimed in claim 1, characterized in that separately prepared aqueous suspensions of calcium hydroxide and sodium zeolite are used and are added in the form of a freshly prepared mixed suspension.

3. A process as claimed in claim 1 or 2, characterized in that 0.2 to 20 parts by weight and preferably 0.4 to 5 parts by weight of the mixture of calcium hydroxide and sodium zeolite are used to 1,000 parts by weight of the water to be treated.

4. A preparation for carrying out the water treatment process claimed in any of claims 1 to 3 consisting of 0.1 to 1 part by weight finely divided calcim hydroxide and 1 part of weight finely divided sodium zeolite of the zeolite NaA type in the form of freshly prepared mixed suspensions.

**Revendications**

1. Procédé de traitement de l'eau de boisson et de l'eau de consommation ou des eaux usées, caractérisé en ce que l'on met en suspension un mélange à base de 0,1 à 1 partie en poids d'hydroxyde de calcium en fines particules avec une partie en poids de zéolite sodée, échangeuse d'ions, finement divisée, du type NaA (finement divisé représente une taille de grains de 1 à 100 μm jusqu'à disparition des étapes de traitement, maintien en suspension et ensuite recueille l'eau traitée après que les particules en suspension soient déposées et après décantation ou après la filtration.

2. Procédé selon la revendication 1, caractérisé en ce que l'on utilise des suspensions aqueuses préparées séparément d'hydroxyde de calcium et de zéolite sodée et ajoute cette dernière sous forme de supsension mixte fraîchement préparée.

3. Procédé selon l'une des revendications 1 ou 2, caractérisé en ce que l'on met en œuvre pour 1 000 parties en poids de l'eu à traiter, 0,2 à 20 parties en poids — de préférence 0,4 à 5 parties en poids — du mélange à base d'hydroxyde de calcium et de zéolite sodée.

4. Moyen pour l'exécution du procédé pour le traitement de l'eau selon l'une des revendications 1 à 3 qui consiste en 0,1 à 1 partie en poids d'hydroxyde de calcium en fines particules et une partie en poids de zéolite sodée en fines particules du type NaA sous la forme d'une suspension mixte fraîchement préparée.